Europäisches Patentamt

European Patent Office

Office européen des brevets

(19)

(11) Numéro de publication: **0 169 159**
**B1**

# FASCICULE DE BREVET EUROPÉEN

(45) Date de publication du fascicule du brevet:
**21.09.88**

(21) Numéro de dépôt: **85460011.1**

(22) Date de dépôt: **11.06.85**

(51) Int. Cl.⁴: **A 22 C 17/04**

(54) **Tête de séparation mécanique destinée notamment au traitement des carcasses broyées et machine qui en est équipée.**

(30) Priorité: **14.06.84 FR 8409534**

(43) Date de publication de la demande:
**22.01.86 Bulletin 86/4**

(45) Mention de la délivrance du brevet:
**21.09.88 Bulletin 88/38**

(84) Etats contractants désignés:
**AT BE CH DE GB IT LI LU NL SE**

(56) Documents cité:
**EP-A-0 132 064**
**DE-A-3 346 063**
**GB-A-1 318 742**
**GB-A-1 451 128**

(73) Titulaire: **LES INNOVATIONS MECANIQUES ALIMENTAIRES (S.A.R.L.), 99, rue de la Gare, F-29114 Bannalec (FR)**

(72) Inventeur: **Kerdiles, Jean- Paul, F-29143 Plogastel Saint- Germain (FR)**
Inventeur: **Marlot, Roger, Kerlan Vras, F-29000 Quimper (FR)**

(74) Mandataire: **Martin, Jean- Jacques, Cabinet REGIMBEAU Corre, Martin, Schrimpf, Warcoin, Ahner 11, rue Franz Heller, F-35700 Rennes (FR)**

EP 0 169 159 B1

## Description

La présente invention concerne une tête de séparation mécanique, destinée notamment au traitement des carcasses broyées. Elle concerne également les machines qui en sont équipées.

Il est connu de traiter les carcasses, prises au sens large, d'animaux provenant par exemple des abattoirs pour séparer la viande des os, afin de façonner celle-ci et de la distribuer pour des applications variées dans le domaine de l'alimentation. Il en est de même pour les poissons et les crustacés dont on veut séparer la chair des arêtes et des carapaces assimilées dans la présente invention à des carcasses.

Des machines destinées à cette application sont connues. Elles sont essentiellement constituées par la combinaison d'une vis d'entraînement hélicoïdale du produit à traiter qui entraîne et presse le produit contre une grille cylindrique entourant la vis, assurant ainsi l'extrusion des chairs et autres substances molles qui sont alors récupérées, tandis que le support, os ou arêtes par exemple, est évacué sous forme de déchet.

D'une part, l'entraînement par vis hélicoïdale crée des bourrages au niveau de la grille car des fragments d'os peuvent venir s'introduire au niveau des mailles de la grille, obstruant celle-ci et bloquant le système. D'autre part, des risques de mauvaises répartitions des matières à traiter le long de leur trajet sont à craindre, ainsi que des risques d'échauffement nuisibles aux conditions d'hygiène requises pour le matériel traitant des produits alimentaires.

Une machine de ce genre est décrite par exemple dans le document EP-A-132 084.

Cette demande européenne antérieure, qui n'était pas encore publiée à la date de priorité de la présente demande et, par conséquent, appartient à l'état de la technique visé à l'article 54.3 de la Convention sur la délivrance de brevets européens, prévoit de disposer en amont de la vis hélicoïdale un moyen de mise sous pression du produit à traiter, en l'occurence une pompe rotative à palettes. Cette pompe a pour effet d'accroître la pression d'application du produit contre la surface interne de la grille, et donc d'augmenter encore le risque d'obstruction des mailles par les morceaux d'os. Il ne semble pas que la vis hélicoïdale dont la fonction traditionnelle est d'acheminer le produit permette de réaliser un brassage véritable de celui-ci ni un raclage efficace des mailles de la grille en évitant les problèmes évoqués plus haut.

La présente invention a pour but de pallier ces inconvénients et concerne une tête de séparation dans laquelle le produit à traiter se trouve pressé contre la grille avec efficacité tout en étant constamment brassé par un organe de brassage, de telle sorte que le risque de voir une croûte d'os se former à la périphérie et une concentration de parties molles au centre se trouve écartée.

La présente invention a également pour objet une tête de séparation dont l'organe de brassage assure également une fonction de raclage de toute la surface interne de la grille. Ainsi tout fragment d'os, d'arête etc..., qui tendrait à venir obstruer les mailles du tamis, se trouve automatiquement raclé et repris dans la masse du produit et se trouve donc brassé avec le reste.

Un autre objet de l'invention est de réaliser une machine équipée d'une telle tête de séparation présentant des qualités de simplicité de mise en oeuvre (moyen unique d'entraînement de tous les organes en rotation) et d'entretien particulièrement aisé, chaque élément constituant la machine étant facile à démonter et à nettoyer.

La présente invention concerne plus précisément une tête de séparation mécanique, destinée au traitement de carcasses préalablement broyées parun broyeur, pour séparer la chair de son support, en particulier des os, cette tête ayant - comme les têtes connues - une forme générale allongée présentant une entrée pour le produit à traiter et une sortie pour les déchets et comportant:

a) une grille de forme générale cylindrique disposée entre l'entrée et la sortie;

b) un moyen d'entraînement sous pression du produit à traiter à l'intérieur de cette grille, qui sert d'interface entre le broyeur de carcasse et la tête, et est capable d'appliquer le produit contre la grille avec une pression suffisante pour que la chair se trouve séparée de son support et extrudée à travers les mailles de la grille;

c) un organe de brassage et de raclage qui est monté rotatif à l'intérieur de la grille et est adapté pour homogénéiser le produit durant son transit, en raclant la face interne de la grille pour éliminer les éléments durs qui tendraient à en obstruer les mailles, cet organe consistant en une pièce tronconique coaxiale à la grille et qui est revêtue de picots, ces derniers étant répartis et dimensionnés de telle manière qu'à chaque tour complet de l'organe de brassage et de raclage, la totalité de la surface périphérique de la grille, dans la zone de celle-ci située en vis-à-vis des picots, se trouve raclée par ces derniers.

L'invention sera mieux comprise à l'aide des explications qui vont suivre et des figures jointes parmi lesquelles:

la figure 1 illustre schématiquement une tête de séparation conforme à l'invention;

la figure 2 représente un organe de brassage et de raclage destiné, conformément à l'invention, à équiper une tête de séparation selon la figure 1;

les figures 3, 4 et 5 illustrent des exemples de réalisation de grilles plus particulièrement adaptées à une tête de séparation conforme à l'invention;

la figure 6 représente schématiquement une machine équipée d'une tête de séparation conforme à l'invention;

Les figures 7 et 8 illustrent schématiquement une variante de réalisation d'une pompe à palettes destinée à coopérer avec l'organe de brassage représenté sur la figure 2.

Pour plus de clarté, les mêmes éléments portent les mêmes références dans toutes les figures.

L'exemple décrit concerne plus précisément l'extraction de viande restée accrochée aux os, mais il pourrait également s'agir, comme cela a été dit précédemment, de chair de poissons ou de crustacés.

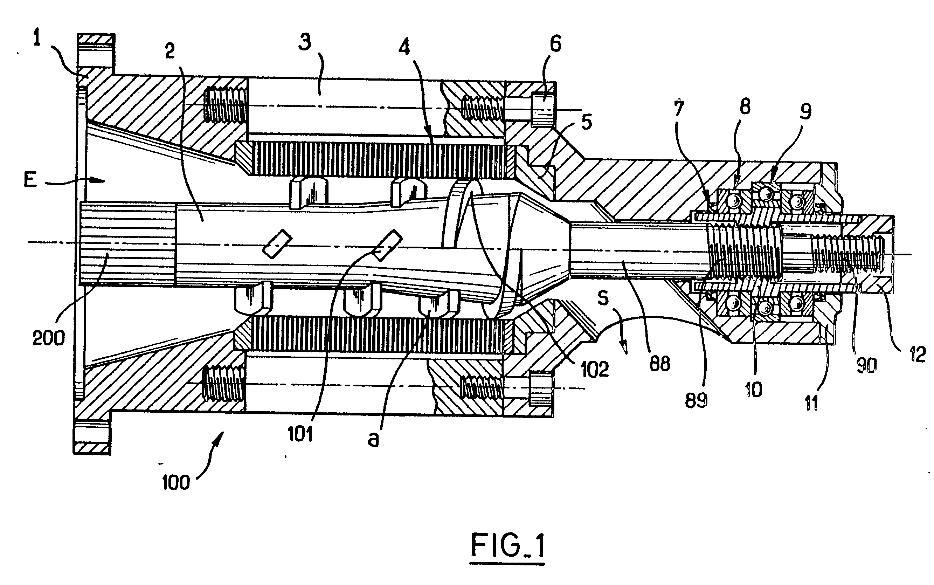

La figure 1 représente schématiquement une tête (100) de séparation mécanique. Elle est, selon une caractéristique importante de l'invention, constituée par la combinaison d'un organe (2) dont la double fonction sera décrite ci-dessous, et qui coopère avec une grille (4) servant de tamis à travers lequel la chair résiduelle est extrudée. Les carcasses portant cette chair résiduelle sont préalablement broyées, comme cela sera expliquée ultérieurement, et entraînées vers l'entrée (E) de cette tête de séparation.

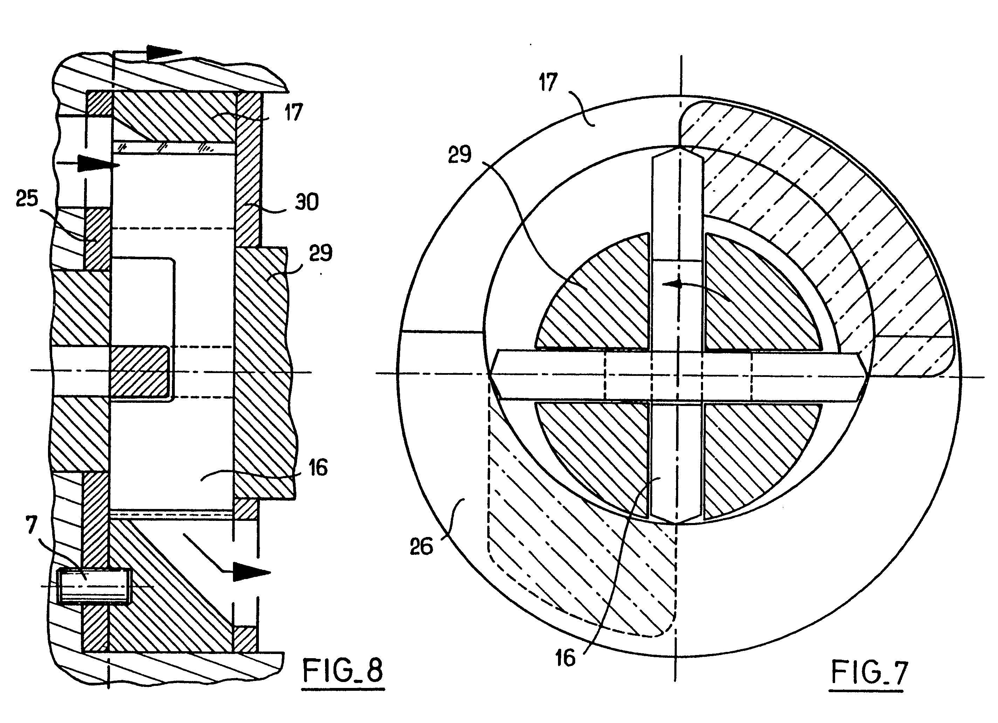

Selon une autre caractéristique de l'invention, un dispositif d'entraînement sous pression est prévu et constitue, dans la machine décrite ultérieurement, l'interface entre le dispositif de broyage proprement dit et cette tête de séparation (100). Il peut s'agir notamment d'une pompe à palette du type décrit plus loin au moyen de la figure 7.

Contrairement donc à ce qui se passe dans les machines le l'Art connu, où c'est une vis hélicoîdale qui entraîne et presse les carcasses broyées contre la grille, l'organe (2) ne les entraîne pas. Elle a pour fonction de brasser ces carcasses lors de leur transit de l'entrée (E) de la tête vers la sortie (S) de telle sorte qu'il se crée, à ce niveau, une certaine homogénéisation du produit en cours de traitement. L'entraînement sous pression de ce produit est précisément, dans le cas de présente invention, assuré grâce à la pompe à palette citée précédemment.

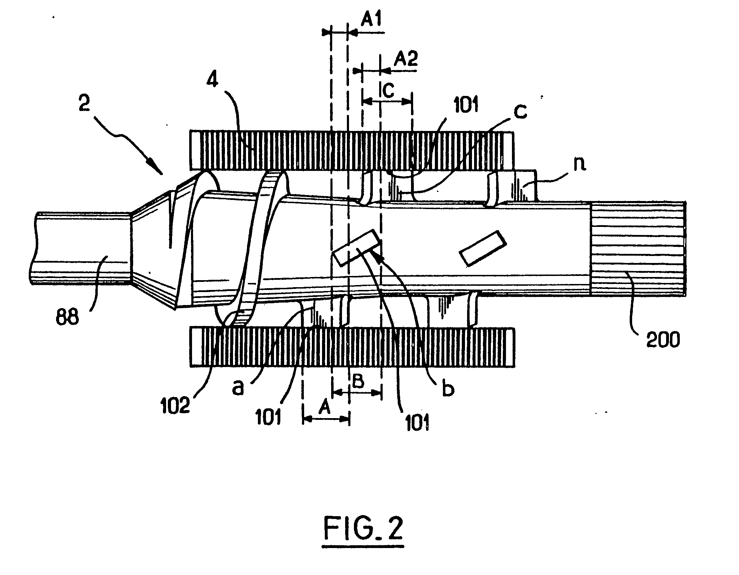

Selon une autre caractéristique importante de l'invention, cet organe de brassage (2) accomplit une seconde fonction, à savoir le raclage de la face interne de la grille (4) de telle sorte que les risques de coîncement de morceau d'os dans les mailles de la grille se trouvent limités au maximum. Ce résultat est obtenu grâce au profil adapté de cet organe appelé dans le suite de la description organe de brassage et de raclage (2), et qui est illustré sur la figure 2. Il s'agit d'une pièce tronconique portant une pluralité de picots tels que (a), (b), (c)... (n), présentant chacun une surface (101) constituant une face de raclage, et capable donc d'arracher des mailles de la grille (2) les corps durs qui pourraient s'y glisser. La répartition et la géométrie de ces picots sont telles que, lors de leur déplacement, lorsque l'organe de brassage et de raclage (2) tourne, ils recouvrent la totalité de la surface interne de la grille (4). Ce recouvrement étant total à chaque tour, les risques de bouchage des mailles sont alors pratiquement inexistants. La figure 2 illustre plus clairement cette caractéristique extrêmement importante de l'invention. La plage (A) correspond à la zone de nettoyage assurée par la surface (101) de l'un des picots, par exemple le picot (a). De même les plages (B) et (C) correspondent respectivement aux zones de nettoyage assurées par les picots suivants (b) et (c). On voit clairement, sur la figure 2, qu'il existe des espaces de recouvrement $(A_1)$, $(A_2)$... entre ces différentes plages de nettoyage. Dans un exemple de réalisation non limitatif, on retrouve tous les 90° la surface (101) de l'un des picots qui racle la surface interne de la grille. A l'extrémité (côté sortie) de l'organe de brassage et de raclage (2), on trouve un filetage (102) dont la fonction est de faciliter l'évacuation des déchets.

Un tel organe (2), conforme à l'invention, comporte un embout arrière cannelé (200) destiné à être rendu solidaire d'un moyen capable de l'entraîner en rotation, comme cela sera expliqué plus loin. L'extrémité avant comporte une queue (88) dont l'extrémité présente un premier filetage (89) se vissant dans une douille (10). (Figure 1). Un palier à roulements (9) autorise la rotation de la queue (88). Un joint (7), une butée (8) et un flasque de fermeture 11 complètent l'ensemble.

Selon une caractéristique importante de l'invention, l'organe de brassage et de rotation (2) est monté flottant et peut donc être déplacé à l'intérieur du support de tête (1) grâce au filetage (89), de telle sorte que l'ouverture du cône à déchets (5), correspondant à la sortie (S) de la tête, se trouve réglable. Le réglage étant obtenu, un contre-écrou (12) vissé sur un second filetage (90) de la queue (88) bloque l'ensemble à ce réglage.

Un tel organe de brassage et de raclage (2) présente l'avantage d'assurer une certaine dispersion du produit quelque soit sa viscosité ou sa teneur en os, contrairement à ce qui se passe dans le cas des systèmes à vis hélicoîdale. Le produit est alors tenu de passer par un pas qui ne lui convient pas forcément et de plus, à la fin du parcours, la périphérie de la matière risque de ne plus être qu'une croûte d'os qui empêche la viande d'accéder aux mailles du tamis. Il en résulte un rendement désastreux et un échauffement prohibitif. Au contraire, dans la présente invention le produit en cours de séparation est constamment brassé, il y a donc homogénéité entre la périphérie et le centre.

La grille (4) est inserée dans le support de tête (1). Elle est fortement comprimée au moyen d'un jeu de colonnettes (3) fixées par des vis de fixation (6), ce qui l'empêche de tourner.

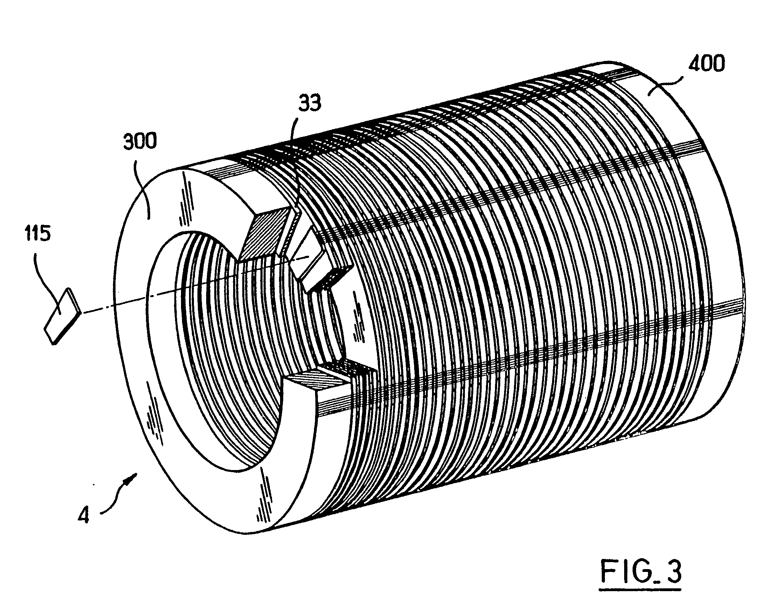

De nombreuses variantes de grilles peuvent être utilisées. Par exemple, comme le montre la figure 3, celle-ci est fabriquée à partir d'un ressort à spire jointives (33) entre lesquelles se trouvent interposées des cales (115) qui délimitent les mailles du tamis qui sont alors radiales. Le ressort est solidaire de deux flasques d'extrémité (300) et (400).

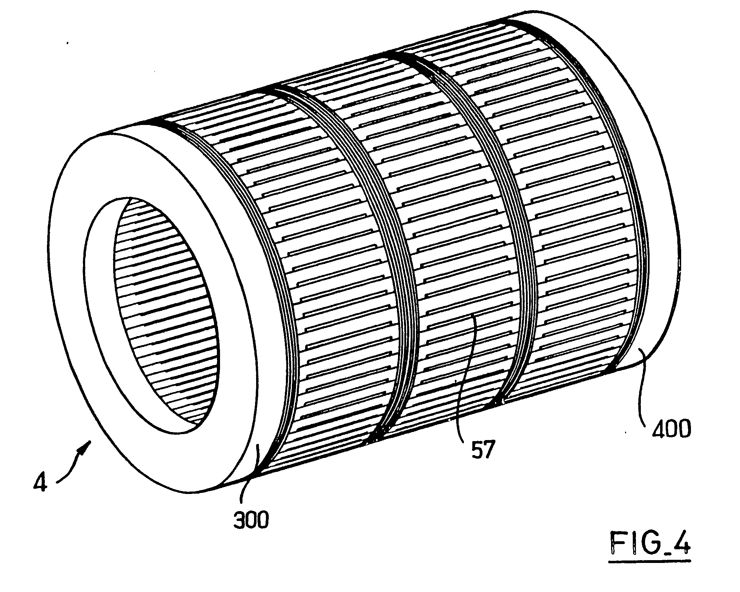

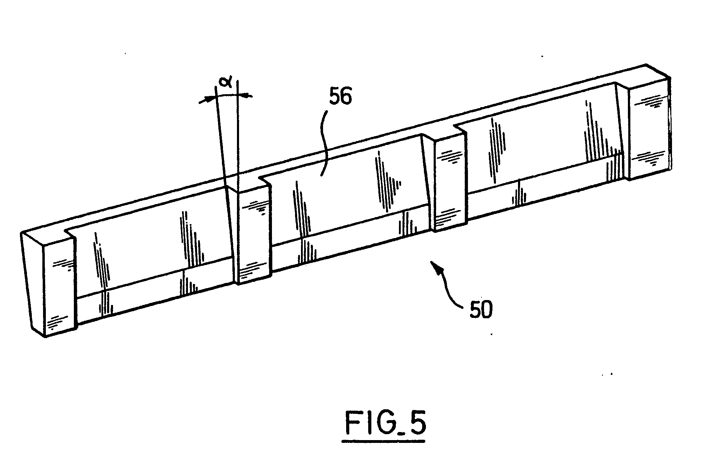

Selon une autre variante de réalisation, illustrée par la figure 4, une telle grille (4) est constituée d'une série de baguettes (50) (figure 5) présentant des évidements (56) et rendues solidaires les unes des autres pour former un cylindre présentant des fentes longitudinales (57) constituant les mailles du tamis à travers lesquelles la viande est extrudée. Ici encore deux flasques d'extrémités (300) et (400), usinées aux côtes voulues, maintiennent le tout. La forme de l'évidement comporte, de préférence, une pente d'un angle (α) qui est fonction du produit traité.

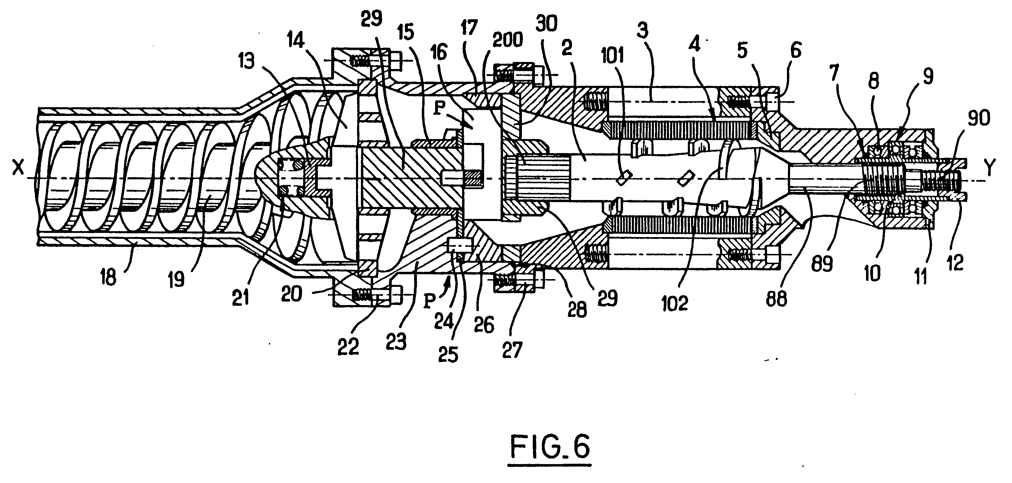

Comme le montre la figure 6, une tête de séparation (100), conforme à l'invention, telle que décrite précédémment, est intégrée à un dispositif broyeur d'alimentation. Une vis d'alimentation (19) entraîne les carcasses broyées vers cette dernière. Le produit à traiter est soumis à l'action d'un couteau (14), monté sur ressort (21), et solidaire d'un centreur de couteaux (13) entraîné en rotation par la vis (19), et qui parachève le broyage. Le produit passe à travers une grille (20) et est pris en charge par une pompe (P) à palette (16) dont une variante préférée de réalisation est illustrée au moyen des figures 7 et 8 qui représentent une telle pompe. Il s'agit du dispositif situé à l'interface entre le broyeur (18) et la tête de séparation (100) qui assure l'alimentation sous pression de cette dernière. Selon une caractéristique importante de l'invention, le corps de la pompe est réalisé en deux demi-corps (26) et (17) non soudés, maintenus solidaires l'un de l'autre par le bâti de la machine formant coffre. Cette architecturepermet un usinage relativement facile, un démontage et un nettoyage aisés. Compte-tenu de l'excentration du volume de compression, il est nécessaire d'avoir une forme ovoîde pour obtenir une continuité dans la poussée du produit. Ce résultat est acquis par sciage du corps de pompe en deux, la matière perdue dans cette opération resserr le corps de pompe et lui donne précisément la forme définitive ovoîde recherchée.

Selon une autre caractéristique importante de l'invention, le rotor (29) maintenu par un palier (15) entraîne la pompe (P) en rotation. Ce mouvement de rotation est transmis par le couteau (14) au rotor (29) de la pompe et à l'émbout cannelé (200) de l'organe (2) de brassage et de raclage de la tête de séparation (100), par l'intermédiaire de la plaque de fermeture (30). Tous ces éléments sont donc montés sur un même axe de rotation (XY) et entraînés par un seul moteur. Le support de pompe (23), centré au moyen d'un pion de centrage (24), est rendu solidaire du nez du broyeur (18) d'une part, et du support de tête (1) d'autre part, par des vis de fixation (27) et (22). Un joint (28) et une plaque d'usure (25) complètent le montage.

Une telle machine est très facile à entretenir, efficace et fonctionne sans risques d'élévation de température prohibitive pour les produits traités. Ses applications sont nombreuses selon les dimensions que l'on donne aux différents éléments qui la constituent.

**Revendications**

1. Tête de séparation mécanique (100), destinée au traitement de carcasses, préalablement broyées par un broyeur (18), pour séparer la chair de son support, en particulier des os, la dite tête de separation (100) ayant une forme générale allongée présentant une entrée (E) pour le produit à traiter, et ne sortie (S) pour les déchets, et comportant:

a) une grille (4) de forme générale cylindrique disposée entre ladite entrée (E) et ladite sortie (S);

b) un moyen (P) d'entraînement sous pression du produit à traiter à l'intérieur de la grille (4), qui sert d'interface entre le broyeur (18) de carcasse et la tête de séparation (100) et est capable d'appliquer le produit contre la grille (4) avec une pression suffisante pour que la chair se trouve séparée de son support, et extrudée à travers les mailles de la grille (4);

c) un organe de brassage et de raclage (2) qui est monté rotatif à l'intérieur de la grille (4) et est adapté pour homogénéiser le produit durant son transit, en raclant la surface interne de la grille (4) pour éliminer les éléments durs qui tendraient à en obstruer les mailles, cet organe (2) consistant en une pièce tronconique coaxiale à la grille (4) et qui est revêtue de picots (a, b, c,... d), ces derniers étant répartis et dimensionnés de telle manière qu'à chaque tour complet de l'organe (2), la totalité de la surface périphérique de la grille (4), dans la zone de celle-ci située en vis-à-vis des picots, se trouve raclée par ces derniers.

2. Tête de séparation mécanique selon la revendication 1, caractérisée en ce que l'organe (2) de brassage et de raclage est muni à son extrémité située du côté de la sortie (S) d'un filetage (102) dont la fonction est de faciliter l'évacuation des déchets.

3. Tête de séparation (100) selon l'une des revendications 1 et 2, caractérisée en ce que cet organe (2) de brassage et de raclage comporte des moyens de réglage du cône d'éjection (S) des déchets à la sortie (5) de la tête par le déplacement de l'organe (2).

4. Tête de séparation (100) selon la revendication 3 , caractérisée en ce que ces moyens de réglage sont constitués par une douille (10) coopérant avec un premier filetage (89) réalisé sur la queue (88) de l'organe (2) de brassage et de raclage, et un contre-écrou (12) coopérant avec un deuxième filetage (90) réalisé sur cette même queue (88).

5. Tête de séparation selon l'une des revendications précédéntes, caractérisée en ce que la grille (4) est constituée par un ressort (33) à spires jointives coopérant avec des cales (115) pour former les mailles du tamis orientées dans le sens radial.

6. Tête de séparation selon l'une des revendications 1 à 4, caractérisée en ce que cette grille (4) est constituée par une succession de baguettes (50) présentant des évidements (56) rendues solidaires les unes des autres pour former un cylindre (4) présentant des fentes longitudinales constituant les mailles du tamis.

7.Tête de séparation (100) selon la revendication 6, caractérisée en ce que l'évidement (56) présente une pente d'angle (α) fonction du produit traité.

8. Tête de séparation (100) selon l'une des revendications précédentes, caractérisée en ce que le moyen d'entraînement sous pression du produit à traiter est une pompe à palette (P) dont le corps de pompe est constitué de deux demi-corps non soudés (17, 26) et rendus solidaires l'un de l'autre de telle sorte que la forme définitive du corps soit ovoîde.

9.Machine destinée à séparer la chair des carcasses tels que os, arêtes, carapaces, caractérisée en ce qu'elle est équipée d'une tête de séparation (100) selon l'une des revendications précédentes.


**Patentansprüche**

1. Mechanischer Trennkopf (100) für die Behandlung von zuvor mittels einer Zerkleinerungsvorrichtung (18) zerkleinerten Gerippen zum Trennen des Fleischs von seiner Unterlage, insbesondere Knochen, wobei der Trennkopf (100) eine im wesentlichen langgestreckte Form mit einem Einlaß (E) für das zu behandelnde Produkt und einem Auslaß (S) für die Abfälle hat und folgende Teile aufweist:

a) ein zwischen dem Einlaß (E) und dem Auslaß (S) angeordnetes Gitter (4) von im wesentlichen zylindrischer Form,

b) eine Vorrichtung (P) für die Förderung des zu behandelnden Produkts unter Druck im Inneren des Gitters (4), welche als Verbindungsglied zwischen der Gerippe-Zerkleinerungsvorrichtung (18) und dem Trennkopf (100) dient und in der Lage ist, das Produkt mit einem ausreichenden Druck gegen das Gitter (4) zu pressen, um das Fleisch von seiner Unterlage zu trennen und es durch die Öffnungen des Gitters (4) hindurchzupressen;

c) ein) drehbar im Inneren des Gitters (4) gelagertes Rühr- und Kratzelement (2) zum Homogenisieren des Produkts während seines Durchlaufs unter Abkratzen der Innenfläche des Gitters (4) zum Entfernen von harten Bestandteilen, welche die Gitteröffnungen zusetzen könnten, wobei dieses Element (2) aus einem mit dem Gitter (4) koaxialen kegelstumpfförmigen Teil besteht, welches mit Stegen (a, b, c ...

d) in einer derartigen Verteilung und mit derartigen Abmessungen besetzt ist, daß der gesamte den Stegen gegenüberliegende Bereich des Umfangsfläche des Gitters (4) bei jeder vollen Umdrehung des Elements (2) von den Stegen abgekratzt wird.

2.Mechanischer Trennkopf nach Anspruch 1, dadurch gekennzeichnet, daß das Rühr- und Kratzelement (2) an seinem dem Ausgang (S) zugewandten Ende mit einem Schraubengang (102) versehen ist, dessen Funktion darin besteht, den Austrag der Abfälle zu erleichtern.

3. Trennkopf (100) nach einem der Ansprüche 1 und 2, dadurch gekennzeichnet, daß das Rühr- und Kratzelement (2) eine Einrichtung zum Verstellen des Austragskonus (5) für die Abfälle am Auslaß (S) des Kopfs durch Verlagerung des Elements (2) aufweist.

4. Trennkopf (100) nach Anspruch 3, dadurch gekennzeichnet, daß die Verstelleinrichtung eine mit einem an einem Fortsatz (88) des Elements (2) gebildeten ersten Gewinde (89) zusammenwirkende Buchse (10) und eine Kontermutter (12) aufweist, welche mit einem an dem Fortsatz (88) ausgebildeten zweiten Gewinde (90) zusammenwirkt.

5. Trennkopf nach einem der vorstehenden Ansprüche, dadurch gekennzeichnet, daß das Gitter (4) aus einer Feder (33) mit eng nebeneinanderliegenden Windungen gebildet ist, welche mit Keilen (115) zusammenwirken, um in radialer Richtung ausgerichtete Sieböffnungen zu bilden.

6. Trennkopf nach einem der Ansprüche 1 bis 4, dadurch gekennzeichnet, daß das Gitter (4) aus einer Folge von mit Aussparungen (56) versehenen Leisten (50) gebildet ist, welche fest miteinander verbunden sind, um einen Zylinder (4) zu bilden, welcher die Sieböffnungen darstellende Längsschlitze aufweist.

7. Trennkopf (100) nach Anspruch 6, dadurch gekennzeichnet, daß die Aussparungen (56) eine Schräge aufweisen, deren Winkel (α) eine Funktion des behandelten Produkts ist.

8. Trennkopf (100) nach einem der vorstehenden Ansprüche, dadurch gekennzeichnet, daß die Vorrichtung zum Fördern des zu behandelnden Produkts unter Druck eine Flügelpumpe (P) ist, deren Pumpenkörper aus zwei Körperhälften (17, 26) zusammengesetzt ist, welche nicht verschweißt und derart fest miteinander verbunden sind, daß die Endform des Körpers im wesentlichen eiförmig ist.

9. Maschine zum Trennen des Fleischs von Gerippen, z. B. von Knochen, Gräten, Panzern, dadurch gekennzeichnet, daß sie mit einem Trennkopf (100) nach einem der Vorstehenden Ansprüche bestückt ist.


**Claims**

1. A mechanical separation head (100), for the treatment of carcases previously crushed in a crusher (18), in order to separate the flesh from its backing, particularly from bones, the said mechanical separation (100) head having a general elongated shape with an entry (E) for the product to be treated, and an exit (S) for the scraps and comprising:

a) a grille (4) with a general cylindric shape, located between the said entry (E) and the said exit (S);

b) a means (P) for driving under pressure the product to be treated inside the grille (4), which serves as an interface between the carcase crusher (18) and said separation head (100) and is capable of applying the product against the grille (4) with a pressure sufficient for the flesh to be separated from the crushed carcases and extruded across the meshes of the grille (4);

c) a mashing and scraping member (2) which is rotary mounted inside the grille (4) and is adapted to homogeneise the product during its transit, while scraping the internal surface of the grille (4) for eliminating hard elements which tend to obstruct the meshes of said grille, this member (2) comprising a trunco-conical piece which is coaxial with the grille (4) and which is equipped with teeth (a, b, c,... n), the latter being arranged and having such a size that, for each complete rotation of the member (2), the entire peripheral surface of the grille (4), in the zone facing the teeth, is scraped by said teeth.

2. A mechanical separation head according to claim 1, characterized in that at its end situated on the side of the exit (S), the mashing and scraping member (2) is provided with a thread (102), the function of which is to facilitate emptying of the waste.

3. A separation head (100) according to one of claims 1 or 2, characterized in that said mashing and scraping member (2) comprises adjustment means for the waste ejection cone at the exit (S) of the head by displacement of the member (2).

4. A separation head (100) according to claim 3, characterized in that said adjustment means is constituted by a sleeve (10) cooperating with a first thread (89) made in a tail (88) of said mashing and scraping member (2), and a lock-nut (12) cooperating with a second thread (90) made in said tail (88).

5. A separation head according to one of the preceding claims, characterized in that the grille (4) is constituted by a spring of jointed spirals (33) cooperating with wedges (115) forming the meshes of said grille oriented in the radial direction.

6. A separation head according to one of claims 1 to 4, characterized in that said grille (4) is constituted by a succession of rods (50) having cut-outs (56) and fixed to each other to form a cylinder having longitudinal slots constituting the meshes of said grille.

7. A separation head according to claim 6, wherein each cut-out (56) has a slope of angle ($\alpha$), which is a function of the product to be treated.

8. A separation head according to one of the preceding claims, characterized in that said means for driving under pressure the product to be treated is a vane pump (P), said pump having a body contituted by two non-welded half-bodies (17, 26) fixed to each other so that the definitive form of said body is ovoid.

9. A machine for separating flesh from carcases such as bones, fish-bones and shells characterized in that it is equipped with a separation head (100) according to one of the preceding claims.

FIG.1

0 169 159

**0 169 159**

FIG.2

3

FIG. 3

0 169 159

4

300

57

400

FIG_4

9

FIG.5

FIG.6

FIG.8

FIG.7

0 169 159